# FASCICULE DE BREVET EUROPEEN

(11) **EP 3 310 583 B1**
(45) Date de publication et mention de la délivrance du brevet: **17.04.2019**
(21) Numéro de dépôt: 16729912.2
(22) Date de dépôt: 17.06.2016
(51) Int. Cl.: B60C 1/00, C08L 9/06, C08L 57/02, C08L 91/00, C08K 3/36, C08K 3/04, C08K 3/06

(54) **COMPOSITION DE CAOUTCHOUC COMPRENANT UN COPOLYMERE DE STYRENE ET DE BUTADIENE DE FAIBLE TEMPERATURE DE TRANSITION VITREUSE, ET UN FORT TAUX DE CHARGE ET DE PLASTIFIANT**
KAUTSCHUKZUSAMMENSETZUNG MIT EINEM STYROL-BUTADIEN-COPOLYMER MIT NIEDRIGER GLASÜBERGANGSTEMPERATUR UND HOHEM GEHALT EINES FÜLLSTOFFES UND ODER WEICHMACHERS
RUBBER COMPOSITION COMPRISING A STYRENE-BUTADIENE COPOLYMER HAVING A LOW GLASS TRANSITION TEMPERATURE, AND A HIGH CONTENT OF FILLER AND OF PLASTICIZER

(30) Priorité: 18.06.2015 FR 1555567
(43) Date de publication de la demande: 25.04.2018
(73) Titulaire: Compagnie Générale des Etablissements Michelin, 63000 Clermont-Ferrand (FR)
(72) Inventeur: ABAD, Vincent, 63040 Clermont-Ferrand Cedex 9 (FR)
(74) Mandataire: Wroblewski, Nicolas Paul André
(86) Numéro de dépôt international: PCT/EP2016/063987
(87) Numéro de publication internationale: WO 2016/202968

(56) Documents cités:
- WO-A1-2012/069585
- WO-A1-2013/040425

## Description

L'invention est relative aux compositions, notamment pour pneumatiques et plus particulièrement aux compositions comprenant un élastomère copolymère de styrène et de butadiène de faible température de transition vitreuse (Tg).

Depuis que les économies de carburant et la nécessité de protéger l'environnement sont devenues une priorité, il s'est avéré nécessaire de produire des pneumatiques ayant une résistance au roulement réduite, sans pénalisation des autres propriétés du pneumatique. Les manufacturiers ont développé des compositions de pneumatique permettant de diminuer cette résistance au roulement, notamment par l'introduction de silice comme charge renforçante, ou de résine de haute température de transition vitreuse comme plastifiant.

Par exemple, les Demanderesses ont déjà décrit l'utilisation de résines de haute Tg, comme décrit dans les documents WO-2005/087859 ou WO-2006/061064.

Par ailleurs, le document WO-2013/039499 décrit des compositions comprenant des taux de charges élevées, et un système plastifiant comprenant une résine hydrocarbonée et une huile plastifiante, les taux de plastifiant total étant de l'ordre de 60 à 100 pce, avec environ 20 à 40 pce d'huile et 40 à 60 pce de résine, ces compositions permettant d'obtenir des propriétés variables d'adhérence et d'usure en pneumatique.

Néanmoins, les manufacturiers cherchent toujours des solutions pour améliorer les performances des compositions pour pneumatique et notamment la résistance au roulement, l'adhérence, l'usure, la rigidité des compositions cuites, associée au comportement routier et au confort de conduite, en même temps que la viscosité des compositions crues, associée à la facilité de mise en oeuvre industrielle des compositions (processabilité).

A présent, les Demanderesses ont montré que des compositions particulières à base d'au moins un élastomère spécifique, un fort taux de charge renforçante et un système plastifiant spécifique comprenant un très fort taux de résine, permettaient d'avoir un compromis amélioré entre de nombreuses performances recherchées pour les compositions de pneumatique, c'est-à-dire la résistance au roulement, l'adhérence, l'usure, la rigidité des compositions cuites, associée au comportement routier et au confort de conduite, en même temps que la viscosité des compositions crues, associée à la facilité de mise en oeuvre industrielle des compositions (processabilité).

L'invention concerne donc une composition de caoutchouc à base d'au moins 80 pce (parties en poids pour cent parties en poids d'élastomère) d'un élastomère styrène-butadiène (SBR) dit SBR de basse Tg, dont la température de transition vitreuse (Tg) est inférieure à -60°C ; au moins 130 pce de charge renforçante ; au moins 110 pce au total d'un système plastifiant comprenant une résine hydrocarbonée à un taux compris dans un domaine allant de 70 à 100 pce et une huile plastifiante, à un taux compris dans un domaine allant de 10 à 40 pce ; et un système de vulcanisation.

Préférentiellement, l'invention concerne une composition telle que définie ci-dessus, dans laquelle ledit SBR de basse Tg présente une teneur de styrène comprise dans un domaine allant de 3 à 40 % en masse, préférentiellement de 3 à 30% en masse. Préférentiellement également, ledit SBR de basse Tg présente une fraction butadiénique ayant une teneur en liaisons vinyl -1,2 comprise entre 4% et 30% (% molaire), de préférence entre 4% et 25%. De préférence, ledit SBR de basse Tg a une Tg inférieure à -60°C, de préférence comprise dans un domaine allant de -60°C à - 110°C, préférentiellement de -65°C à -95°C. De préférence également, ledit SBR de basse Tg est fonctionnalisé par une fonction choisie dans le groupe constitué par les groupes fonctionnels comportant une liaison carbone-étain, les groupes fonctionnels aminés, les groupes fonctionnels comportant un silanol, les groupes fonctionnels comportant un alkoxysilane, les groupes carboxyliques, les groupes polyéthers, les groupes époxydes et les mélanges de ces derniers ; et plus préférentiellement, ledit SBR de basse Tg est fonctionnalisé par une fonction choisie dans le groupe constitué par les groupes fonctionnels comportant une liaison carbone-étain, les groupes fonctionnels aminés, les groupes fonctionnels comportant un silanol, les groupes fonctionnels comportant un alkoxysilane, et les mélanges de ces derniers.

Selon un mode de réalisation préférentiel de l'invention, ladite composition ne comprend pas d'autre élastomère diénique, le taux total de SBR de basse Tg étant de 100 pce.

Selon un autre mode de réalisation préférentiel de l'invention, dans laquelle la composition comprend en outre un autre élastomère diénique, à un taux compris dans un domaine allant de 5 à 20 pce, de préférence de 5 à 15 pce. De ce cas, ledit autre élastomère diénique est de préférence choisi dans le groupe constitué par les polybutadiènes, les polyisoprènes de synthèse, le caoutchouc naturel, les copolymères de butadiène, les copolymères d'isoprène et les mélanges de ces élastomères.

Préférentiellement, l'invention concerne une composition telle que définie ci-dessus, dans laquelle la charge renforçante est choisie dans le groupe constitué par les silices, les noirs de carbone et les mélanges de ces derniers.

Préférentiellement également, l'invention concerne une composition telle que définie ci-dessus, dans laquelle le taux de charge renforçante est compris dans un domaine allant de 130 à 160 pce, de préférence de 135 à 155 pce.

Selon une variante préférée, l'invention concerne une composition telle que définie ci-dessus, dans laquelle la charge renforçante majoritaire est du noir de carbone. Préférentiellement, le taux de noir de carbone est compris dans un domaine allant de 70 à 155 pce, de préférence de 95 à 150 pce.

Selon une autre variante préférée, l'invention concerne une composition telle que définie ci-dessus, dans laquelle la charge renforçante majoritaire est de la silice. Préférentiellement, le taux de silice est compris dans un domaine allant de 70 à 155 pce, de préférence de 95 à 150 pce.

De préférence, l'invention concerne une composition telle que définie ci-dessus, dans laquelle le taux total de plastifiants est compris dans un domaine allant de 110 à 160 pce, de préférence de 110 à 150 pce, préférentiellement de 115 à 130 pce.

De préférence également, l'invention concerne une composition telle que définie ci-dessus, dans laquelle le taux de résine hydrocarbonée est compris dans un domaine allant de 80 à 95 pce, de préférence de 85 à 90 pce.

Préférentiellement, l'invention concerne une composition telle que définie ci-dessus, dans laquelle la résine hydrocarbonée présente une Tg supérieure à 0°C, de préférence supérieure à 30°C.

Préférentiellement également, l'invention concerne une composition telle que définie ci-dessus, dans laquelle la résine hydrocarbonée présente une masse moléculaire moyenne en nombre comprise entre 400 et 2000 g/mol, de préférence entre 500 et 1500 g/mol.

De manière préférentielle, l'invention concerne une composition telle que définie ci-dessus, dans laquelle la résine hydrocarbonée présente un indice de polymolécularité (Ip) inférieur à 3, de préférence inférieur à 2.

De manière préférentielle également, l'invention concerne une composition telle que définie ci-dessus, dans laquelle l'huile plastifiante est choisie dans le groupe constitué par les huiles naphténiques, les huiles paraffiniques, les huiles MES (Médium Extracted Solvates), les huiles TDAE (Treated Distillate Aromatic Extracts), les huiles minérales, les huiles végétales, les plastifiants éthers, les plastifiants esters, les plastifiants phosphates, les plastifiants sulfonates et les mélanges de ces composés.

De préférence, l'invention concerne une composition telle que définie ci-dessus, dans laquelle le taux d'huile plastifiante est compris dans un domaine allant de 15 à 35 pce, de préférence de 20 à 30 pce.

L'invention concerne également un pneumatique comprenant une composition telle que définie ci-dessus, de préférence dans tout ou partie de sa bande de roulement.

Préférentiellement, le pneumatique selon l'invention sera choisi parmi les pneumatiques destinés à équiper un véhicule à deux roues, un véhicule de tourisme, ou encore un véhicule dit « poids lourd » (c'est-à-dire métro, bus, véhicules hors-la-route, engins de transport routier tels que camions, tracteurs, remorques), ou encore des avions, des engins de génie civil, agraire, ou de manutention.

### I- Constituants de la composition

Les compositions de caoutchouc selon l'invention sont à base d'au moins 80 pce (parties en poids pour cent parties en poids d'élastomère) d'un élastomère styrène-butadiène (SBR) dit SBR de basse Tg, dont la température de transition vitreuse (Tg) est inférieure à -60°C ; au moins 130 pce de charge renforçante ; au moins 110 pce au total d'un système plastifiant comprenant une résine hydrocarbonée à un taux compris dans un domaine allant de 70 à 100 pce et une huile plastifiante, à un taux compris dans un domaine allant de 10 à 40 pce ; et un système de vulcanisation.

Par l'expression «composition à base de» il faut entendre une composition comportant le mélange et/ou le produit de réaction in situ des différents constituants de base utilisés, certains de ces constituants pouvant réagir et/ou étant destinés à réagir entre eux, au moins partiellement, lors des différentes phases de fabrication de la composition, ou lors de la cuisson ultérieure, modifiant la composition telle qu'elle est préparée au départ. Ainsi les compositions telles que mises en oeuvre pour l'invention peuvent être différentes à l'état non réticulé et à l'état réticulé.

Dans la présente description, sauf indication expresse différente, tous les pourcentages (%) indiqués sont des pourcentages en masse.

Par ailleurs, le terme « pce » (en anglais « phr ») signifie au sens de la présente demande de brevet, partie en poids pour cent parties d'élastomère, thermoplastiques et non thermoplastiques confondus. Au sens de la présente invention, les élastomères thermoplastiques (TPE) font partie des élastomères.

D'autre part, tout intervalle de valeurs désigné par l'expression « entre a et b » représente le domaine de valeurs allant de plus de a à moins de b (c'est-à-dire bornes a et b exclues) tandis que tout intervalle de valeurs désigné par l'expression « de a à b » signifie le domaine de valeurs allant de a jusqu'à b (c'est-à-dire incluant les bornes strictes a et b).

Enfin, lorsqu'on fait référence à un composé « majoritaire », on entend au sens de la présente invention, que ce composé est majoritaire parmi les composés du même type dans la composition, c'est-à-dire que c'est celui qui représente la plus grande quantité en masse parmi les composés du même type. Ainsi, par exemple, une charge renforçante majoritaire est la charge renforçante représentant la plus grande masse par rapport à la masse totale des charges renforçantes dans la composition. Au contraire, un composé « minoritaire » est un composé qui ne représente pas la fraction massique la plus grande parmi les composés du même type.

### I-1 Elastomère diénique

Les compositions selon l'invention comprennent à titre d'élastomère, au moins 80 pce d'un élastomère dit SBR de basse Tg, à savoir un copolymère statistique de styrène et de butadiène dont la température de transition vitreuse (Tg) mesurée par DSC selon la norme ASTM D3418 est inférieure ou égale à -60°C. La composition peut également comprendre, en complément optionnel du SBR de basse Tg, un autre élastomère diénique, à un taux maximal de 20 pce.

### I-1.1 SBR de basse Tg

Les SBR de basse Tg peuvent contenir entre 99% et 20% en poids d'unités butadiéniques et entre 1% et 80% en poids d'unités styréniques. Les SBR de basse Tg peuvent avoir toute microstructure qui est fonction des conditions de polymérisation utilisées, notamment de la présence ou non d'un agent modifiant et/ou randomisant et des quantités d'agent modifiant et/ou randomisant employées, à condition de présenter une Tg inférieure à -60°C. Les SBR de basse Tg peuvent être préparés en dispersion ou en solution ; ils peuvent être couplés et/ou étoilés ou encore fonctionnalisés avec un agent de couplage et/ou d'étoilage ou de fonctionnalisation. Pour un couplage à du noir de carbone, on peut citer par exemple des groupes fonctionnels comprenant une liaison C-Sn ou des groupes fonctionnels aminés tels que aminobenzophénone par exemple ; pour un couplage à une charge inorganique renforçante telle que la silice, on peut citer par exemple des groupes fonctionnels silanol ou polysiloxane ayant une extrémité silanol (tels que décrits par exemple dans FR 2 740 778, US 6 013 718 et WO 2008/141702), des groupes alkoxysilane (tels que décrits par exemple dans FR 2 765 882 ou US 5 977 238), des groupes carboxyliques (tels que décrits par exemple dans WO 01/92402 ou US 6 815 473, WO 2004/096865 ou US 2006/0089445) ou encore des groupes polyéthers (tels que décrits par exemple dans EP 1 127 909, US 6 503 973, WO 2009/000750 et WO 2009/000752). Comme autres exemples de SBR de basse Tg fonctionnalisés, on peut citer également des SBR du type époxydés.

Ainsi, selon un mode préférentiel, le SBR de basse Tg est fonctionnalisé par une fonction choisie dans le groupe constitué par les groupes fonctionnels comportant une liaison carbone-étain, les groupes fonctionnels aminés, les groupes fonctionnels comportant un silanol, les groupes fonctionnels comportant un alkoxysilane, les groupes carboxyliques, les groupes polyéthers, les groupes époxydes et les mélanges de ces derniers. De préférence, la fonction est choisie dans le groupe constitué par les groupes fonctionnels comportant une liaison carbone-étain, les groupes fonctionnels aminés, les groupes fonctionnels comportant un silanol, les groupes fonctionnels comportant un alkoxysilane, et les mélanges de ces derniers.

Ces SBR de basse Tg fonctionnalisés peuvent être utilisés en coupage entre eux ou avec des SBR de basse Tg non fonctionnalisés. Par exemple, on peut utiliser un SBR de basse Tg fonctionnalisé silanol ou polysiloxane ayant une extrémité silanol, en mélange avec un SBR de basse Tg couplé et/ou étoilé à l'étain (décrit dans WO 11/042507), ce dernier représentant un taux compris de 5 à 50%, par exemple de 25 à 50%.

Conviennent en particulier les SBR de basse Tg ayant une température de transition vitreuse (Tg) mesurée par DSC selon la norme ASTM D3418 inférieure à - 60°C, de préférence comprise dans un domaine allant de -60°C à -110°C, préférentiellement de -65°C à -95°C.

Conviennent en particulier les SBR de basse Tg ayant une teneur (% massique) en styrène comprise entre 3% et 40% et plus particulièrement entre 3% et 30%, préférentiellement entre 3% et 25% ou entre 15% et 30%,

Conviennent en particulier les SBR de basse Tg présentant une fraction butadiénique ayant une teneur (% molaire) en liaisons vinyl -1,2 comprise entre 4% et 30%, de préférence entre 4% et 25%, plus préférentiellement entre 4% et 20%.

### I-1.2 Elastomère diénique autre

La composition peut également comprendre, en complément optionnel du SBR de basse Tg, un autre élastomère diénique qui peut être choisi parmi tous les élastomères diéniques connus de l'homme de l'art.

Par élastomère (ou « caoutchouc », les deux termes étant considérés comme synonymes) du type "diénique", on rappelle ici que doit être compris de manière connue un (on entend un ou plusieurs) élastomère issu au moins en partie (i.e., un homopolymère ou un copolymère) de monomères diènes (monomères porteurs de deux doubles liaisons carbone-carbone, conjuguées ou non).

Les élastomères diéniques peuvent être classés dans deux catégories : "essentiellement insaturés" ou "essentiellement saturés". On entend en général par "essentiellement insaturé", un élastomère diénique issu au moins en partie de monomères diènes conjugués, ayant un taux de motifs ou unités d'origine diénique (diènes conjugués) qui est supérieur à 15% (% en moles); c'est ainsi que des élastomères diéniques tels que les caoutchoucs butyle ou les copolymères de diènes et d'alpha-oléfines type EPDM n'entrent pas dans la définition précédente et peuvent être notamment qualifiés d'élastomères diéniques "essentiellement saturés" (taux de motifs d'origine diénique faible ou très faible, toujours inférieur à 15%). Dans la catégorie des élastomères diéniques "essentiellement insaturés", on entend en particulier par élastomère diénique "fortement insaturé" un élastomère diénique ayant un taux de motifs d'origine diénique (diènes conjugués) qui est supérieur à 50%.

Ces définitions étant données, on entend plus particulièrement par élastomère diénique susceptible d'être utilisé dans les compositions selon l'invention:
(a) tout homopolymère obtenu par polymérisation d'un monomère diène conjugué ayant de 4 à 12 atomes de carbone;
(b) tout copolymère obtenu par copolymérisation d'un ou plusieurs diènes conjugués entre eux ou avec un ou plusieurs composés vinyle aromatique ayant de 8 à 20 atomes de carbone;
(c) un copolymère ternaire obtenu par copolymérisation d'éthylène, d'une α-oléfine ayant 3 à 6 atomes de carbone avec un monomère diène non conjugué ayant de 6 à 12 atomes de carbone, comme par exemple les élastomères obtenus à partir d'éthylène, de propylène avec un monomère diène non conjugué du type précité tel que notamment l'hexadiène-1,4, l'éthylidène norbornène, le dicyclopentadiène;
(d) un copolymère d'isobutène et d'isoprène (caoutchouc butyle), ainsi que les versions halogénées, en particulier chlorées ou bromées, de ce type de copolymère.

Bien qu'elle s'applique à tout type d'élastomère diénique, l'homme du métier du pneumatique comprendra que la présente invention est de préférence mise en oeuvre avec des élastomères diéniques essentiellement insaturés, en particulier du type (a) ou (b) ci-dessus.

A titre de diènes conjugués conviennent notamment le butadiène-1,3, le 2-méthyl-1,3-butadiène, les 2,3-di(alkyle en C1-C5)-1,3-butadiènes tels que par exemple le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, l'aryl-1,3-butadiène, le 1,3-pentadiène, le 2,4-hexadiène. A titre de composés vinylaromatiques conviennent par exemple le styrène, l'ortho-, méta-, para-méthylstyrène, le mélange commercial "vinyle-toluène", le para-tertiobutylstyrène, les méthoxystyrènes, les chlorostyrènes, le vinylmésitylène, le divinylbenzène, le vinylnaphtalène.

Les copolymères peuvent contenir entre 99% et 20% en poids d'unités diéniques et entre 1% et 80% en poids d'unités vinylaromatiques. Les élastomères peuvent avoir toute microstructure qui est fonction des conditions de polymérisation utilisées, notamment de la présence ou non d'un agent modifiant et/ou randomisant et des quantités d'agent modifiant et/ou randomisant employées. Les élastomères peuvent être par exemple à blocs, statistiques, séquencés, microséquencés, et être préparés en dispersion ou en solution ; ils peuvent être couplés et/ou étoilés ou encore fonctionnalisés avec un agent de couplage et/ou d'étoilage ou de fonctionnalisation. Pour un couplage à du noir de carbone, on peut citer par exemple des groupes fonctionnels comprenant une liaison C-Sn ou des groupes fonctionnels aminés tels que aminobenzophénone par exemple ; pour un couplage à une charge inorganique renforçante telle que silice, on peut citer par exemple des groupes fonctionnels silanol ou polysiloxane ayant une extrémité silanol (tels que décrits par exemple dans FR 2 740 778, US 6 013 718 et WO 2008/141702), des groupes alkoxysilane (tels que décrits par exemple dans FR 2 765 882 ou US 5 977 238), des groupes carboxyliques (tels que décrits par exemple dans WO 01/92402 ou US 6 815 473, WO 2004/096865 ou US 2006/0089445) ou encore des groupes polyéthers (tels que décrits par exemple dans EP 1 127 909, US 6 503 973, WO 2009/000750 et WO 2009/000752). Comme autres exemples d'élastomères fonctionnalisés, on peut citer également des élastomères (tels que SBR, BR, NR ou IR) du type époxydés.

Ces élastomères fonctionnalisés peuvent être utilisés en coupage entre eux ou avec des élastomères non fonctionnalisés. Par exemple, on peut utiliser un élastomère fonctionnalisé silanol ou polysiloxane ayant une extrémité silanol, en mélange avec un élastomère couplés et/ou étoilés à l'étain (décrit dans WO 11/042507), ce dernier représentant un taux compris de 5 à 50%, par exemple de 25 à 50%.

Conviennent les polybutadiènes et en particulier ceux ayant une teneur (% molaire) en unités -1,2 comprise entre 4% et 80% ou ceux ayant une teneur (% molaire) en cis-1,4 supérieure à 80%, les polyisoprènes, les copolymères de butadiène-styrène et en particulier ceux ayant une Tg (température de transition vitreuse (Tg, mesurée selon ASTM D3418) comprise entre 0°C et -60°C et plus particulièrement entre -10°C et -60°C, une teneur en styrène comprise entre 5% et 60% en poids et plus particulièrement entre 20% et 50%, une teneur (% molaire) en liaisons -1,2 de la partie butadiénique comprise entre 4% et 75%, une teneur (% molaire) en liaisons trans-1,4 comprise entre 10% et 80%, les copolymères de butadiène-isoprène et notamment ceux ayant une teneur en isoprène comprise entre 5% et 90% en poids et une Tg de -40°C à -80°C, les copolymères isoprène-styrène et notamment ceux ayant une teneur en styrène comprise entre 5% et 50% en poids et une Tg comprise entre -5°C et -60°C. Dans le cas des copolymères de butadiène-styrène-isoprène conviennent notamment ceux ayant une teneur en styrène comprise entre 5% et 50% en poids et plus particulièrement comprise entre 10% et 40%, une teneur en isoprène comprise entre 15% et 60% en poids et plus particulièrement entre 20% et 50%, une teneur en butadiène comprise entre 5% et 50% en poids et plus particulièrement comprise entre 20% et 40%, une teneur (% molaire) en unités -1,2 de la partie butadiénique comprise entre 4% et 85%, une teneur (% molaire) en unités trans -1,4 de la partie butadiénique comprise entre 6% et 80%, une teneur (% molaire) en unités -1,2 plus -3,4 de la partie isoprénique comprise entre 5% et 70% et une teneur (% molaire) en unités trans -1,4 de la partie isoprénique comprise entre 10% et 50%, et plus généralement tout copolymère butadiène-styrène-isoprène ayant une Tg comprise entre -20°C et -70°C.

En résumé, l'élastomère diénique de la composition est choisi préférentiellement dans le groupe des élastomères diéniques fortement insaturés constitué par les polybutadiènes (en abrégé "BR"), les polyisoprènes (IR) de synthèse, le caoutchouc naturel (NR), les copolymères de butadiène, les copolymères d'isoprène et les mélanges de ces élastomères. De tels copolymères sont plus préférentiellement choisis dans le groupe constitué par les copolymères de butadiène-styrène (SBR), les copolymères d'isoprène-butadiène (BIR), les copolymères d'isoprène-styrène (SIR), les copolymères d'isoprène-butadiène-styrène (SBIR), les copolymères de butadiène-acrylonitrile (NBR), les copolymères de butadiène-styrène-acrylonitrile (NSBR) ou un mélange de deux ou plus de ces composés.

Selon un mode préférentiel de réalisation de l'invention, la composition comprend un total de 100 pce de SBR de basse Tg et ne comprend donc pas d'autre élastomère diénique.

Selon un autre mode particulier de réalisation de l'invention, la composition de caoutchouc comprend par exemple entre 5 et 20 pce, en particulier entre 5 et 15 pce, d'un élastomère diénique autre, tel que décrit ci-dessus.

### I-2 Charge renforçante

La composition selon l'invention comprend une charge renforçante. On peut utiliser tout type de charge renforçante connue pour ses capacités à renforcer une composition de caoutchouc utilisable pour la fabrication de pneumatiques, par exemple une charge organique tel que du noir de carbone, une charge inorganique renforçante telle que de la silice, de l'alumine, ou encore un coupage de ces deux types de charge.

Comme noirs de carbone conviennent tous les noirs de carbone, notamment les noirs dits de grade pneumatique. Parmi ces derniers, on citera plus particulièrement les noirs de carbone renforçants des séries 100, 200 ou 300 (grades ASTM), comme par exemple les noirs N115, N134, N234, N326, N330, N339, N347, N375, ou encore, selon les applications visées, les noirs de séries plus élevées (par exemple N660, N683, N772). Les noirs de carbone pourraient être par exemple déjà incorporés à un élastomère isoprénique sous la forme d'un masterbatch (voir par exemple demandes WO 97/36724 ou WO 99/16600).

Comme exemples de charges organiques autres que des noirs de carbone, on peut citer les charges organiques de polyvinyle fonctionnalisé telles que décrites dans les demandes WO-A-2006/069792, WO-A-2006/069793, WO-A-2008/003434 et WO-A-2008/003435.

La composition peut contenir un type de silice ou un coupage de plusieurs silices. La silice utilisée peut être toute silice renforçante connue de l'homme du métier, notamment toute silice précipitée ou pyrogénée présentant une surface BET ainsi qu'une surface spécifique CTAB toutes deux inférieures à 450 m2/g, de préférence de 30 à 400 m2/g. A titres de silices précipitées hautement dispersibles (dites "HDS"), on citera par exemple les silices « Ultrasil 7000 » et « Ultrasil 7005 » de la société Degussa, les silices « Zeosil » 1165MP, 1135MP et 1115MP de la société Rhodia, la silice « Hi-Sil EZ150G » de la société PPG, les silices « Zeopol » 8715, 8745 et 8755 de la Société Huber, des silices précipitées traitées telles que par exemple les silices "dopées" à l'aluminium décrites dans la demande EP-A-0735088 ou les silices à haute surface spécifique telles que décrites dans la demande WO 03/16837.

La silice a de préférence une surface BET comprise entre 45 et 400 m2/g, plus préférentiellement comprise entre 60 et 300 m2/g.

Ces compositions peuvent optionnellement également contenir, en complément des agents de couplage, des activateurs de couplage, des agents de recouvrement des charges inorganiques ou plus généralement des agents d'aide à la mise en oeuvre susceptibles de manière connue, grâce à une amélioration de la dispersion de la charge dans la matrice de caoutchouc et à un abaissement de la viscosité des compositions, d'améliorer leur faculté de mise en oeuvre à l'état cru, ces agents étant par exemple des silanes hydrolysables tels que des alkylalkoxysilanes, des polyols, des acides gras, des polyéthers, des amines primaires, secondaires ou tertiaires, des polyorganosiloxanes hydroxylés ou hydrolysables.

On utilise notamment des silanes polysulfurés, dits "symétriques" ou "asymétriques" selon leur structure particulière, tels que décrits par exemple dans les demandes WO03/002648 (ou US 2005/016651) et WO03/002649 (ou US 2005/016650).

Conviennent en particulier, sans que la définition ci-après soit limitative, des silanes polysulfurés dits "symétriques" répondant à la formule générale (III) suivante:

(III) Z - A - Sx - A - Z ,

dans laquelle:
- x est un entier de 2 à 8 (de préférence de 2 à 5) ;
- A est un radical hydrocarboné divalent (de préférence des groupements alkylène en C1-C18 ou des groupements arylène en C6-C12, plus particulièrement des alkylènes en C1-C10, notamment en C1-C4, en particulier le propylène) ;
- Z répond à l'une des formules ci-après: 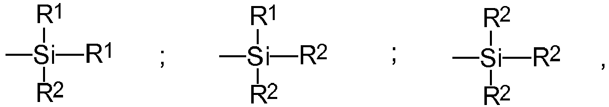 dans lesquelles:
   - les radicaux R1, substitués ou non substitués, identiques ou différents entre eux, représentent un groupe alkyle en C1-C18, cycloalkyle en C5-C18 ou aryle en C6-C18 (de préférence des groupes alkyle en C1-C6, cyclohexyle ou phényle, notamment des groupes alkyle en C1-C4, plus particulièrement le méthyle et/ou l'éthyle).
   - les radicaux R2, substitués ou non substitués, identiques ou différents entre eux, représentent un groupe alkoxyle en C1-C18 ou cycloalkoxyle en C5-C18 (de préférence un groupe choisi parmi alkoxyles en C1-C8 et cycloalkoxyles en C5-C8, plus préférentiellement encore un groupe choisi parmi alkoxyles en C1-C4, en particulier méthoxyle et éthoxyle).

Dans le cas d'un mélange d'alkoxysilanes polysulfurés répondant à la formule (III) ci-dessus, notamment des mélanges usuels disponibles commercialement, la valeur moyenne des "x" est un nombre fractionnaire de préférence compris entre 2 et 5, plus préférentiellement proche de 4. Mais l'invention peut être aussi avantageusement mise en oeuvre par exemple avec des alkoxysilanes disulfurés (x = 2).

A titre d'exemples de silanes polysulfurés, on citera plus particulièrement les polysulfures (notamment disulfures, trisulfures ou tétrasulfures) de bis-(alkoxyl(C1-C4)-alkyl(C1-C4)silyl-alkyl(C1-C4)), comme par exemple les polysulfures de bis(3-triméthoxysilylpropyl) ou de bis(3-triéthoxysilylpropyl). Parmi ces composés, on utilise en particulier le tétrasulfure de bis(3-triéthoxysilylpropyl), en abrégé TESPT, de formule [(C2H5O)3Si(CH2)3S2]2 ou le disulfure de bis-(triéthoxysilylpropyle), en abrégé TESPD, de formule [(C2H5O)3Si(CH2)3S]2. On citera également à titre d'exemples préférentiels les polysulfures (notamment disulfures, trisulfures ou tétrasulfures) de bis-(monoalkoxyl(C1-C4)-dialkyl(C1-C4)silylpropyl), plus particulièrement le tétrasulfure de bis-monoéthoxydiméthylsilylpropyl tel que décrit dans la demande de brevet WO 02/083782 (ou US 2004/132880).

A titre d'agent de couplage autre qu'alkoxysilane polysulfuré, on citera également les POS (polyorganosiloxanes) bifonctionnels ou encore des polysulfures d'hydroxysilane (R2 = OH dans la formule III ci-dessus) tels que décrits dans les demandes de brevet WO 02/30939 (ou US 6,774,255) et WO 02/31041 (ou US 2004/051210), ou encore des silanes ou POS porteurs de groupements fonctionnels azo-dicarbonyle, tels que décrits par exemple dans les demandes de brevet WO 2006/125532, WO 2006/125533, WO 2006/125534.

Dans les compositions de caoutchouc conformes à l'invention, la teneur en agent de couplage est préférentiellement comprise entre 7 et 18 pce, plus préférentiellement entre 8 et 17 et encore plus préférentiellement entre 9 et 15 pce.

L'homme du métier comprendra qu'à titre de charge équivalente de la silice décrite dans le présent paragraphe, pourrait être utilisée une charge renforçante d'une autre nature, notamment organique, dès lors que cette charge renforçante serait recouverte d'une couche de silice, ou bien comporterait à sa surface des sites fonctionnels, notamment hydroxyles, nécessitant l'utilisation d'un agent de couplage pour établir la liaison entre la charge et l'élastomère.

L'état physique sous lequel se présente la charge renforçante est indifférent, que ce soit sous forme de poudre, de microperles, de granulés, de billes ou toute autre forme densifiée appropriée.

Pour les besoins de l'invention, le taux de charge renforçante totale (noir de carbone et/ou charge inorganique renforçante telle que silice) est supérieur à 130 pce, de préférence compris dans un domaine allant de 130 à 160 pce, plus préférentiellement de 135 à 155 pce et de manière très préférentielle, de 145 à 155 pce. En dessous de 130 pce de charge, la composition pourrait être moins performante en adhérence sur sol sec et mouillé tandis qu'au-dessus de 160 pce de charge, la composition pourrait être moins performante en résistance au roulement.

Par charge renforçante majoritaire, on entend celle qui présente le plus fort taux parmi les charges renforçantes présentes dans la composition. Notamment, on entend par charge renforçante majoritaire toute charge renforçante qui représente au moins 50% en poids des charges renforçantes présentes, préférentiellement plus de 50% et plus préférentiellement plus de 60%.

Selon un mode de réalisation préférentiel, la composition comprend du noir de carbone comme charge majoritaire, en coupage éventuel avec de la silice, comme charge minoritaire. Dans ce cas, le taux de noir est préférentiellement compris dans un domaine allant de 70 à 155 pce, de préférence de 95 à 150 pce. Le taux de silice est préférentiellement compris dans un domaine allant de 0 à 60 pce, de préférence de 0 à 35 pce. Dans ce mode de réalisation, le taux de noir est préférentiellement supérieur à 130 pce et le taux de silice est préférentiellement de 0 pce ou inférieur à 10 pce.

Selon un autre mode de réalisation, plus préférentiel, la composition comprend de la silice comme charge majoritaire, en coupage éventuel avec du noir de carbone, comme charge minoritaire. Dans ce cas, le taux de silice est préférentiellement compris dans un domaine allant de 70 à 155 pce, de préférence de 95 à 150 pce. Le taux de noir de carbone est préférentiellement compris dans un domaine allant de 0 à 60 pce, de préférence de 0 à 35 pce. Dans ce mode de réalisation, le taux de silice est préférentiellement supérieur à 130 pce et le taux de noir est préférentiellement inférieur ou égal à 5 pce et préférentiellement compris dans un domaine allant de 1 à 5 pce.

### I-3 Système de vulcanisation

Le système de vulcanisation proprement dit est à base de soufre (ou d'un agent donneur de soufre) et d'un accélérateur primaire de vulcanisation. A ce système de vulcanisation de base viennent s'ajouter, incorporés au cours de la première phase non-productive et/ou au cours de la phase productive telles que décrites ultérieurement, divers accélérateurs secondaires ou activateurs de vulcanisation connus tels qu'oxyde de zinc, acide stéarique ou composés équivalents, dérivés guanidiques (en particulier diphénylguanidine).

Le soufre est utilisé à un taux préférentiel compris entre 0,5 et 10 pce, plus préférentiellement compris entre 0,5 et 5 pce, en particulier entre 0,5 et 3 pce lorsque la composition de l'invention est destinée, selon un mode préférentiel de l'invention, à constituer une bande de roulement de pneumatique.

Le système de vulcanisation de la composition selon l'invention peut également comprendre un ou plusieurs accélérateurs additionnels, par exemple les composés de la famille des thiurames, les dérivés dithiocarbamates de zinc, les sulfénamides, les guanidines ou les thiophosphates. On peut utiliser en particulier tout composé susceptible d'agir comme accélérateur de vulcanisation des élastomères diéniques en présence de soufre, notamment des accélérateurs du type thiazoles ainsi que leurs dérivés, des accélérateurs de type thiurames, dithiocarbamates de zinc. Ces accélérateurs sont plus préférentiellement choisis dans le groupe constitué par le disulfure de 2-mercaptobenzothiazyle (en abrégé "MBTS"), N-cyclohexyl-2-benzothiazyle sulfénamide (en abrégé "CBS"), N,N-dicyclohexyl-2-benzothiazyle sulfénamide (en abrégé "DCBS"), N-tert-butyl-2-benzothiazyle sulfénamide (en abrégé "TBBS"), N-tert-butyl-2-benzothiazyle sulfénimide (en abrégé "TBSI"), dibenzyldithiocarbamate de zinc (en abrégé "ZBEC") et les mélanges de ces composés. De préférence, on utilise un accélérateur primaire du type sulfénamide.

### I-4 Système plastifiant

La composition selon l'invention comporte un système plastifiant. Ce système plastifiant est composé d'au moins une résine hydrocarbonée et une huile plastifiante.

Le taux total de plastifiant dans la composition est supérieur ou égal à 110 pce, de préférence compris dans un domaine allant de 110 à 160 pce, en particulier de 110 à 150 pce, par exemple de 115 à 130 pce. En dessous de 110 pce, la composition pourrait être moins performante quant à la processabilité industrielle.

### I-4-1 Résine hydrocarbonée

Le système plastifiant comprend une résine hydrocarbonée thermoplastique. Cette résine est un solide à température ambiante (23°C), par opposition à un composé plastifiant liquide tel qu'une huile.

De préférence, la résine plastifiante hydrocarbonée thermoplastique présente au moins une quelconque des caractéristiques suivantes :
- une Tg supérieure à 0°C, de préférence supérieure à 30°C ;
- une masse moléculaire moyenne en nombre (Mn) comprise entre 400 et 2000 g/mol, plus préférentiellement entre 500 et 1500 g/mol ;
- un indice de polymolécularité (Ip) inférieur à 3, plus préférentiellement inférieur à 2 (rappel : Ip = Mw/Mn avec Mw masse moléculaire moyenne en poids).

Plus préférentiellement, cette résine plastifiante hydrocarbonée thermoplastique présente l'ensemble des caractéristiques préférentielles ci-dessus.

La macrostructure (Mw, Mn et Ip) de la résine hydrocarbonée est déterminée par chromatographie d'exclusion stérique (SEC) : solvant tétrahydrofurane ; température 35°C ; concentration 1 g/l ; débit 1 ml/min ; solution filtrée sur filtre de porosité 0,45 µm avant injection ; étalonnage de Moore avec des étalons de polystyrène ; jeu de 3 colonnes "WATERS" en série ("STYRAGEL" HR4E, HR1 et HR0.5) ; détection par réfractomètre différentiel ("WATERS 2410") et son logiciel d'exploitation associé ("WATERS EMPOWER").

Les résines hydrocarbonées thermoplastiques peuvent être aliphatiques, ou aromatiques ou encore du type aliphatique/ aromatique c'est-à-dire à base de monomères aliphatiques et/ou aromatiques. Elles peuvent être naturelles ou synthétiques, à base ou non de pétrole (si tel est le cas, connues aussi sous le nom de résines de pétrole).

A titre de monomères aromatiques conviennent par exemple le styrène, l'alpha-méthylstyrène, l'ortho-, méta-, para-méthylstyrène, le vinyle-toluène, le para-tertiobutylstyrène, les méthoxystyrènes, les chlorostyrènes, le vinylmésitylène, le divinylbenzène, le vinylnaphtalène, tout monomère vinylaromatique issu d'une coupe C9 (ou plus généralement d'une coupe C8 à C10). De préférence, le monomère vinylaromatique est du styrène ou un monomère vinylaromatique issu d'une coupe C9 (ou plus généralement d'une coupe C8 à C10). De préférence, le monomère vinylaromatique est le monomère minoritaire, exprimé en fraction molaire, dans le copolymère considéré.

Selon un mode de réalisation particulièrement préférentiel, la résine plastifiante hydrocarbonée est choisie dans le groupe constitué par les résines d'homopolymères ou copolymères de cyclopentadiène (en abrégé CPD) ou dicyclopentadiène (en abrégé DCPD), les résines d'homopolymères ou copolymères terpène, les résines d'homopolymères ou copolymères terpène phénol, les résines d'homopolymères ou copolymères de coupe C5, les résines d'homopolymères ou copolymères de coupe C9, les résines d'homopolymères et copolymères d'alpha-méthyl-styrène et les mélanges de ces résines, utilisables seules ou en combinaison avec un plastifiant liquide, par exemple une huile MES ou TDAE. Le terme "terpène" regroupe ici de manière connue les monomères alpha-pinène, beta-pinène et limonène ; préférentiellement est utilisé un monomère limonène, composé se présentant de manière connue sous la forme de trois isomères possibles : le L-limonène (énantiomère lévogyre), le D-limonène (énantiomère dextrogyre), ou bien le dipentène, racémique des énantiomères dextrogyre et lévogyre. Parmi les résines plastifiantes hydrocarbonées ci-dessus, on citera notamment les résines d'homo- ou copolymères d'alphapinène, betapinène, dipentène ou polylimonène.

Les résines préférentielles ci-dessus sont bien connues de l'homme du métier et disponibles commercialement, par exemple vendues en ce qui concerne les :
- résines polylimonène : par la société DRT sous la dénomination "Dercolyte L120" (Mn=625 g/mol ; Mw=1010 g/mol ; Ip=1,6; Tg=72°C) ou par la société ARIZONA sous la dénomination "Sylvagum TR7125C" (Mn=630 g/mol ; Mw=950 g/mol ; Ip=1,5 ; Tg=70°C) ;
- résines de copolymère coupe C5/ vinylaromatique, notamment coupe C5/ styrène ou coupe C5/ coupe C9 : par Neville Chemical Company sous les dénominations "Super Nevtac 78", "Super Nevtac 85" ou "Super Nevtac 99", par Goodyear Chemicals sous dénomination "Wingtack Extra", par Kolon sous dénominations "Hikorez T1095" et "Hikorez T1100", par Exxon sous dénominations "Escorez 2101" et "Escorez 1273" ;
- résines de copolymère limonène/ styrène : par DRT sous dénomination "Dercolyte TS 105" de la société DRT, par ARIZONA Chemical Company sous dénominations "ZT115LT" et "ZT5100".

A titre d'exemples d'autres résines préférentielles, on peut citer également les résines alpha-méthyl-styrène modifiées phénol. Pour caractériser ces résines modifiées phénol, on rappelle qu'il est utilisé de manière connue un indice dit "indice hydroxyle" (mesuré selon norme ISO 4326 et exprimé en mg KOH/g). Les résines alpha-méthyl-styrène, notamment celles modifiées phénol, sont bien connues de l'homme du métier et disponibles commercialement, par exemple vendues par la société Arizona Chemical sous les dénominations "Sylvares SA 100" (Mn = 660 g/mol ; Ip = 1,5 ; Tg = 53°C) ; "Sylvares SA 120" (Mn = 1030 g/mol ; Ip = 1,9 ; Tg = 64°C) ; "Sylvares 540" (Mn = 620 g/mol ; Ip = 1,3 ; Tg = 36°C ; indice d'hydroxyle = 56 mg KOH/g) ; "Silvares 600" (Mn = 850 g/mol ; Ip = 1,4 ; Tg = 50°C ; indice d'hydroxyle = 31 mg KOH/g).

Dans la composition de l'invention, le taux de résine plastifiante hydrocarbonée est compris dans un domaine allant de 70 à 100 pce, préférentiellement allant de 80 à 95 pce, encore plus préférentiellement de 85 à 90 pce.

### I-4-2 Huile plastifiante

Le système plastifiant comprend également une huile d'extension liquide à 20 °C, dit à « basse Tg », c'est-à-dire qui par définition présente une Tg inférieure 0°C, de préférence inférieure à -20 °C, de préférence inférieure à -40 °C.

Toute huile d'extension, qu'elle soit de nature aromatique ou non-aromatique connue pour ses propriétés plastifiantes vis-à-vis d'élastomères diéniques, est utilisable. A température ambiante (20°C), ces huiles, plus ou moins visqueuses, sont des liquides (c'est-à-dire, pour rappel, des substances ayant la capacité de prendre à terme la forme de leur contenant), par opposition notamment à des résines plastifiantes hydrocarbonées qui sont par nature solides à température ambiante.

Conviennent particulièrement les huiles d'extension choisies dans le groupe constitué par les huiles naphténiques (à basse ou haute viscosité, notamment hydrogénées ou non), les huiles paraffiniques, les huiles MES (Médium Extracted Solvates), les huiles TDAE (Treated Distillate Aromatic Extracts), les huiles minérales, les huiles végétales, les plastifiants éthers, les plastifiants esters, les plastifiants phosphates, les plastifiants sulfonates et les mélanges de ces composés. Par exemple, on peut citer ceux qui contiennent entre 12 et 30 atomes de carbone, par exemple le trioctyle phosphate. A titre d'exemples de plastifiants esters non aqueux et non hydrosolubles, on peut citer notamment les composés choisis dans le groupe constitué par les trimellitates, les pyromellitates, les phtalates, les 1,2-cyclohexane dicarboxylates, les adipates, les azélaates, les sébacates, les triesters de glycérol et les mélanges de ces composés. Parmi les triesters ci-dessus, on peut citer notamment des triesters de glycérol, de préférence constitués majoritairement (pour plus de 50 %, plus préférentiellement pour plus de 80 % en poids) d'un acide gras insaturé en C18, c'est-à-dire choisi dans le groupe constitué par l'acide oléique, l'acide linoléique, l'acide linolénique et les mélanges de ces acides. Plus préférentiellement, qu'il soit d'origine synthétique ou naturelle (cas par exemple d'huiles végétales de tournesol ou de colza), l'acide gras utilisé est constitué pour plus de 50% en poids, plus préférentiellement encore pour plus de 80% en poids d'acide oléique. De tels triesters (trioléates) à fort taux d'acide oléique sont bien connus, ils ont été décrits par exemple dans la demande WO 02/088238, à titre d'agents plastifiants dans des bandes de roulement pour pneumatiques.

Dans la composition selon l'invention le taux d'huile d'extension est compris entre 10 et 40 pce, plus préférentiellement entre 15 et 35 pce, encore plus préférentiellement entre 20 et 30 pce. En dessous de 10 pce d'huile ou au-dessus de 40 pce d'huile, la composition pourrait être moins performante en adhérence, de par une Tg du mélange trop haute ou trop basse.

### I-5 Autres additifs possibles

Les compositions de caoutchouc conformes à l'invention comportent optionnellement également tout ou partie des additifs usuels habituellement utilisés dans les compositions d'élastomères destinées notamment à la fabrication de bandes de roulement, comme par exemple des pigments, des agents de protection tels que cires anti-ozone, anti-ozonants chimiques, anti-oxydants, des agents plastifiants autres que ceux précédemment décrits, des agents anti-fatigue, des résines renforçantes, des accepteurs (par exemple résine phénolique novolaque) ou des donneurs de méthylène (par exemple HMT ou H3M).

Bien entendu, les compositions conformes à l'invention peuvent être utilisées seules ou en coupage (i.e., en mélange) avec toute autre composition de caoutchouc utilisable pour la fabrication de pneumatiques.

Il va de soi que l'invention concerne les compositions de caoutchouc précédemment décrites tant à l'état dit "cru" ou non réticulé (i.e., avant cuisson) qu'à l'état dit "cuit" ou réticulé, ou encore vulcanisé (i.e., après réticulation ou vulcanisation).

### II- Préparation des compositions de caoutchouc

Les compositions sont fabriquées dans des mélangeurs appropriés, en utilisant deux phases de préparation successives bien connues de l'homme du métier: une première phase de travail ou malaxage thermo-mécanique (parfois qualifiée de phase "non-productive") à haute température, jusqu'à une température maximale comprise entre 110°C et 190°C, de préférence entre 130°C et 180°C, suivie d'une deuxième phase de travail mécanique (parfois qualifiée de phase "productive") à plus basse température, typiquement inférieure à 110°C, par exemple entre 60°C et 100°C, phase de finition au cours de laquelle est incorporé le système de réticulation ou vulcanisation; de telles phases ont été décrites par exemple dans les demandes EP-A-0501227, EP-A-0735088, EP-A-0810258, WO00/05300 ou WO00/05301.

La première phase (non-productive) est conduite préférentiellement en plusieurs étapes thermomécaniques. Au cours d'une première étape on introduit, dans un mélangeur approprié tel qu'un mélangeur interne usuel, les élastomères, les charges renforçantes, la combinaison de plastifiants (et éventuellement les agents de couplage et/ou d'autres ingrédients à l'exception du système de vulcanisation), à une température comprise entre 20°C et 100°C et, de préférence, entre 25°C et 100°C. Après quelques minutes, préférentiellement de 0,5 à 2 min et une montée de la température à 90°C à 100°C, les autres ingrédients (c'est-à-dire, ceux qui restent si tous n'ont pas été mis au départ) sont ajoutés en une fois ou par parties, à l'exception du système de vulcanisation durant un mélangeage allant de 20 secondes à quelques minutes. La durée totale du malaxage, dans cette phase non-productive, est de préférence comprise entre 2 et 10 minutes à une température inférieure ou égale à 180°C, et préférentiellement inférieure ou égale à 170°C.

Après refroidissement du mélange ainsi obtenu, on incorpore alors le système de vulcanisation à basse température (typiquement inférieure à 100°C), généralement dans un mélangeur externe tel qu'un mélangeur à cylindres; le tout est alors mélangé (phase productive) pendant quelques minutes, par exemple entre 5 et 15 min.

La composition finale ainsi obtenue est ensuite calandrée, par exemple sous la forme d'une feuille ou d'une plaque, notamment pour une caractérisation au laboratoire, ou encore extrudée, pour former par exemple un profilé de caoutchouc utilisé pour la fabrication de semi-finis afin d'obtenir des produits tels qu'une bande de roulement. Ces produits peuvent ensuite être utilisés pour la fabrication de pneumatiques, selon les techniques connues de l'homme du métier.

La vulcanisation (ou cuisson) est conduite de manière connue à une température généralement comprise entre 130°C et 200°C, sous pression, pendant un temps suffisant qui peut varier par exemple entre 5 et 90 min en fonction notamment de la température de cuisson, du système de vulcanisation adopté, de la cinétique de vulcanisation de la composition considérée ou encore de la taille du pneumatique.

Les exemples qui suivent illustrent l'invention sans toutefois la limiter.

### III- Exemples de réalisation de l'invention

### III-1 Préparation des exemples

Dans les exemples qui suivent les compositions caoutchouteuses ont été réalisées comme décrit précédemment.

### III-2 Caractérisation des exemples

Dans les exemples, les compositions de caoutchouc sont caractérisées avant et/ou après cuisson comme indiqué ci-après.

### Tests effectués au laboratoire sur les compositions

### - Viscosité Mooney ou Plasticité Mooney (avant cuisson):

On utilise un consistomètre oscillant tel que décrit dans la norme française NF T 43-005 (1991). La mesure de plasticité Mooney se fait selon le principe suivant : la composition à l'état cru (i.e., avant cuisson) est moulée dans une enceinte cylindrique chauffée à 100°C. Après une minute de préchauffage, le rotor tourne au sein de l'éprouvette à 2 tours/minute et on mesure le couple utile pour entretenir ce mouvement après 4 minutes de rotation. La plasticité Mooney (ML 1+4) est exprimée en "unité Mooney" (UM, avec 1 UM=0,83 Newton.mètre). Plus la valeur de Mooney est basse, plus la viscosité avant cuisson est faible et meilleure est la processabilité de la composition.

### - Essais de traction (après cuisson) :

Ces essais permettent de déterminer les contraintes d'élasticité et les propriétés à la rupture. Sauf indication différente, ils sont basés sur la norme NF ISO 37 de décembre 2005. On mesure en seconde élongation (i.e. après un cycle d'accommodation) les modules sécants dits "nominaux" (ou contraintes apparentes, en MPa, rapportées à la déformation, sans unité) à 10% d'allongement ("MA10"). Toutes ces mesures de traction sont effectuées dans les conditions normales de température (23±2°C) et d'hygrométrie (50±10% d'humidité relative). On mesure également les contraintes à la rupture (en MPa) et les allongements à la rupture (en %). Pour plus de lisibilité les résultats seront indiqués en base 100, la valeur 100 étant attribuée au témoin. Un résultat inférieur à 100 indiquant une diminution de la valeur concernée, et inversement, un résultat supérieur à 100, indiquera une augmentation de la valeur concernée.

### - Propriétés dynamiques

La propriété dynamique tan(δ)max est mesurée sur un viscoanalyseur (Metravib V A4000), selon la norme ASTM D 5992 - 96. On enregistre la réponse d'un échantillon de composition vulcanisée (éprouvette cylindrique de 4 mm d'épaisseur et de 400 mm2 de section), soumis à une sollicitation sinusoïdale en cisaillement simple alterné, à la fréquence de 10Hz, dans les conditions normales de température (23°C) selon la norme ASTM D 1349 - 99. On effectue un balayage en amplitude de déformation crête à crête de 0,1 à 50% (cycle aller), puis de 50% à 1 % (cycle retour). Le résultat exploité est le facteur de perte (tan δ). Pour le cycle retour, on indique la valeur maximale de tan δ observée (tan(δ)max).

Pour la valeur de tan(δ)max à 23°C, plus la valeur est basse, plus la composition aura une hystérèse faible et donc une résistance au roulement faible. Pour plus de lisibilité les résultats seront indiqués, en base 100, la valeur 100 étant attribuée au témoin. Un résultat inférieur à 100 indiquant une diminution de la valeur de tan(δ) max à 23°C (diminution de la résistance au roulement), et inversement, un résultat supérieur à 100, indiquera une augmentation de la valeur de tan(δ)max à 23°C (augmentation de la résistance au roulement).

On enregistre également la réponse d'un échantillon de composition vulcanisée soumis à une sollicitation sinusoïdale en cisaillement simple alterné lors d'un balayage en température, soumis à une sollicitation sinusoïdale à contrainte imposée de 0,7 MPa et à une fréquence de 10 Hz, la température allant de -60°C à 100°C, à raison une vitesse de 1,5°C par minute. La Tg du mélange est indiquée par la température du maximum de tan(δ), notée « Tg (°C) tan(δ) max ». Un autre résultat exploité est le module complexe de cisaillement dynamique (G*), par exemple à 60°C. Pour plus de lisibilité les résultats de G* seront indiqués en base 100, la valeur 100 étant attribuée au témoin. Un résultat inférieur à 100 indiquant une diminution de la valeur concernée, et inversement, un résultat supérieur à 100, indiquera une augmentation de la valeur concernée.

### Tests effectués sur pneumatiques

Des pneumatiques selon l'invention ont ensuite été préparés selon les méthodes habituelles, avec les constituants classiques connus de l'homme du métier : un sommet, deux flancs et deux bourrelets, une armature de carcasse ancrée aux deux bourrelets, une armature de sommet et une bande de roulement, la bande de roulement étant celle décrite pour les besoins de la présente invention.

Les propriétés des pneumatiques selon l'invention peuvent être évaluées par des tests effectués sur des pneumatiques comme indiqué ci-après.

### - Test de mesure de résistance à l'usure

La résistance à l'usure des pneumatiques a été mesurée par un essai dit de roulage sur circuit, avec un véhicule de tourisme « A4 » de la société Audi avec une charge théorique de 380 kg/pneu à l'arrière et 480 kg/pneu à l'avant, le tout avec une pression de 2 bars. Le circuit est parcouru dans des conditions permettant d'user les pneumatiques de manière reproductible entre le témoin et la solution testée : les véhicules évoluent en convoi, ce qui garantit que les pneumatiques sont soumis aux mêmes conditions de vitesse, d'accélérations, de température, et de nature des sols. Le circuit de roulage est parcouru jusqu'à atteindre une distance supérieure à 2500 km.

On considère le pneumatique avant droit du véhicule. Le pneumatique témoin et la solution testée sont pesés avant le roulage et après plus de 2500 km. La masse perdue par le témoin fixe une performance usure à 100 %. Une solution présentant une valeur supérieure à 100 représente un résultat amélioré, c'est-à-dire une masse perdue inférieure.

### - Test d'adhérence : Freinage sur sol sec humide, avec un système ABS

Les pneumatiques sont montés sur un véhicule de tourisme « Golf » de la société Volkswagen, chaque essieu étant lesté à son poids maximal autorisé, et la distance nécessaire pour passer de 80 km/h à 20 km/h est mesurée lors d'un freinage brutal sur sol humide (béton bitumineux). Une solution présentant une valeur supérieure à 100 représente un résultat amélioré, c'est-à-dire une distance de freinage plus courte.

### III-3 Exemples

Les compositions sont fabriquées avec une introduction de l'ensemble des constituants sur un mélangeur interne, à l'exception du système de vulcanisation. Les agents de vulcanisation (soufre et accélérateur) sont introduits sur un mélangeur externe à basse température (les cylindres constitutifs du mélangeur étant à environ 30°C).

Les exemples présentés dans le tableau 1 ont pour objet de comparer les différentes propriétés de caoutchouterie d'une composition C1 conforme à l'invention à une série de compositions témoins (T1 à T6). Les résultats de mesure des propriétés mesurées avant et après cuisson sont présentés au tableau 2.

**Tableau 1**

| Composition | T1 | T2 | T3 | T4 | T5 | T6 | C1 |
|---|---|---|---|---|---|---|---|
| SBR1 (1) | 100 | 100 | 100 | 100 | 100 | 100 | 100 |
| Noir de carbone (2) | 5 | 5 | 5 | 5 | 5 | 5 | 5 |
| Silice (3) | 110 | 90 | 110 | 90 | 150 | 150 | 150 |
| Agent de couplage (4) | 12 | 12 | 8,8 | 7,2 | 12 | 12 | 12 |
| Plastifiant liquide 1 (5) | 30 | 30 | 30 | 30 | 10 | 20 | 30 |
| Résine hydrocarbonée (6) | 85 | 85 | 85 | 85 | 90 | 80 | 85 |
| Total Plastifiants | 115 | 115 | 115 | 115 | 100 | 100 | 115 |
| Oxyde de zinc | 3 | 3 | 3 | 3 | 3 | 3 | 3 |
| Acide stéarique | 2,5 | 2,5 | 2,5 | 2,5 | 2,5 | 2,5 | 2,5 |
| Anitoxydant (7) | 2 | 2 | 2 | 2 | 2 | 2 | 2 |
| Accélérateur (8) | 3 | 3 | 3 | 3 | 3 | 3 | 3 |
| Diphénylguanidine (9) | 2 | 2 | 2 | 2 | 2 | 2 | 2 |
| Soufre | 1 | 1 | 1 | 1 | 1 | 1 | 1 |

| | | | | | | | |
|---|---|---|---|---|---|---|---|
| (1) SBR avec 15% de motif styrène, 24% de motif butadiène -1,2 ; 30% de motif butadiène cis-1,4 ; et 46% de motif trans-1,4. Tg -65°C (2) Grade ASTM N234 (société Cabot) (3) Silice « Zeosil 1165 MP » de la société Solvay type « HDS » (4) Agent de couplage : TESPT (« Si69 » de la société Evonik) (5) Huile TDAE « Vivatec 500 » de la société Klaus Dahleke (6) Résine hydrocarbonée de haute Tg C5/C9 «Escorez 2173» de société EXXON (Mn 810 g/mol) (7) N-(1,3-diméthylbutyl)-N'-phényl-p-phénylènediamine « Vulkanox 4020 » de la société Lanxess et Cire anti-ozone (8) N-cyclohexyl-2-benzothiazol-sulfénamide « Vulkacit CZ » de la société Lanxess (9) Diphénylguanidine « Vulkacit D » de la société Lanxess | | | | | | | |

**Tableau 2**

| Composition | T1 | T2 | T3 | T4 | T5 | T6 | C1 |
|---|---|---|---|---|---|---|---|
| Plasticité ML(1+4) | 32 | 26 | 34 | 29 | 67 | 65 | 52 |
| MA10 (base 100) | 40 | 34 | 37 | 27 | 137 | 127 | 100 |
| Module G* (base 100) | 58 | 43 | 53 | 38 | 125 | 124 | 100 |
| Tanδ max (base 100) | 71 | 52 | 70 | 53 | 114 | 106 | 100 |
| Tg (°C) Tanδ max | -6,8 | -9,6 | -7,0 | -9,8 | 7,3 | 5,7 | -4 |

Par rapport aux compositions témoins, on note que la composition conforme à l'invention présente le meilleur équilibre de performances entre le Mooney (viscosité à cru), la rigidité (MA10 et G*), l'hystérèse (Tan(δ)max à 23°C), et la Tg (°C) Tan(δ)max, qui est un bon indicateur de l'adhérence quand elle est élevée. En effet la composition C1 présente une adhérence, une viscosité à cru et une rigidité bien supérieures à celles des compositions T1 à T4. La même composition C1, comparée aux compositions T5 et T6 propose une hystérèse plus basse, signe d'une amélioration de la résistance au roulement des pneumatiques. Ces résultats montrent que les compositions de l'invention permettent de bonnes performances sur les aspects essentiels que sont la processabilité, le comportement routier, l'adhérence et la résistance au roulement. Aucune des compositions témoin ne permet un aussi bon équilibre de toutes ces performances à la fois.

Le tableau 3 présente une autre série d'exemples, comparant la composition C1 aux témoins T7 à T10, pour lesquels les résultats dont présentés au tableau 4 ci-dessous.

Les résultats montrent à nouveau que la composition de l'invention présente le meilleur équilibre de performances entre la viscosité à cru (Mooney), la rigidité (MA10 et G*), l'hystérèse (Tan(δ)max à 23°C), et l'adhérence (Tg (°C) Tan(δ)max.

Les compositions T7, T8 et C1 ont été utilisées en bandes de roulement sur des pneumatiques respectivement P-T7, P-T8 et P-C1 et de dimension 225/45 R17, et ces pneumatiques ont été testés quant à leurs performances en usure et en adhérence. Les résultats sont présentés dans le tableau 5 ci-dessous.

Il apparait clairement que la composition C1 conforme à l'invention permet une amélioration très significative de l'équilibre entre les performances en usure et en adhérence, par rapport aux compositions T7 et T8.

**Tableau 3**

| Composition | T7 | T8 | T9 | T10 | C1 |
|---|---|---|---|---|---|
| SBR1 (1) | 0 | 0 | 100 | 0 | 100 |
| SBR2 (1a) | 70 | 0 | 0 | 0 | 0 |
| SBR3 (1b) | 30 | 0 | 0 | 0 | 0 |
| SBR4 (1c) | 0 | 100 | 0 | 100 | 0 |
| Noir de carbone (2) | 5 | 5 | 5 | 5 | 5 |
| Silice (3) | 90 | 150 | 150 | 150 | 150 |
| Agent de couplage (4) | 7 | 12 | 12 | 12 | 12 |
| Plastifiant liquide 1 (5) | 0 | 85 | 85 | 30 | 30 |
| Plastifiant liquide 2 (5a) | 25 | 25 | 25 | 0 | 0 |
| Résine hydrocarbonée (6) | 20 | 15 | 15 | 85 | 85 |
| Total plastifiants | 45 | 125 | 125 | 115 | 115 |
| Oxyde de zinc | 3 | 3 | 3 | 3 | 3 |
| Acide stéarique | 2,5 | 2,5 | 2,5 | 2,5 | 2,5 |
| Anitoxydant (7) | 2 | 2 | 2 | 2 | 2 |
| Accélérateur (8) | 2 | 3 | 3 | 3 | 3 |
| Diphénylguanidine | 1,5 | 2 | 2 | 2 | 2 |
| Soufre | 1 | 1 | 1 | 1 | 1 |

| | | | | | |
|---|---|---|---|---|---|
| Références (1) à (9) : cf tableau 1 (1a) SBR avec 27% de motif styrène, 5% de motif butadiène -1,2 ; 15% de motif butadiène cis-1,4 ; et 80% de motif trans-1,4. Tg -48°C (1b) SBR avec 40% de motif styrène, 24% de motif butadiène -1,2 ; 30% de motif butadiène cis-1,4 ; et 46% de motif trans-1,4. Tg -30°C (1c) SBR avec 31% de motif styrène, 63% de motif butadiène -1,2 ; 20% de motif butadiène cis-1,4 ; et 17% de motif trans-1,4. Tg -13°C (5a) Triphenyl phosphate « Disflamoll TP» de la société Lanxess | | | | | |

**Tableau 4**

| Composition | T7 | T8 | T9 | T10 | C1 |
|---|---|---|---|---|---|
| Plasticité ML(1+4) | 72 | 41 | 30 | 48 | 52 |
| MA10 (base 100) | 120 | 115 | 96 | 80 | 100 |
| Module G* (base 100) | 155 | 109 | 33 | 203 | 100 |
| Tanδ max (base 100) | 52 | 125 | 26 | 230 | 100 |
| Tg (°C) Tanδ max | -8 | -6 | -28 | 22 | -4 |

**Tableau 5**

| Pneumatique | P-T7 | P-T8 | P-C1 |
|---|---|---|---|
| Adhérence (base 100) | 71 | 100 | 100 |
| Usure (base 100) | 111 | 44 | 100 |
| Moyenne usure / adhérence | 91 | 72 | 100 |

## Revendications

1. Composition de caoutchouc à base de :
- au moins 80 pce (parties en poids pour cent parties en poids d'élastomère) d'un élastomère styrène-butadiène (SBR) dit SBR de basse Tg, dont la température de transition vitreuse (Tg) est inférieure à -60°C,
- au moins 130 pce de charge renforçante,
- au moins 110 pce au total d'un système plastifiant comprenant une résine hydrocarbonée à un taux compris dans un domaine allant de 70 à 100 pce et une huile plastifiante, à un taux compris dans un domaine allant de 10 à 40 pce,
- un système de vulcanisation.

2. Composition selon la revendication 1, dans laquelle ledit SBR de basse Tg présente une teneur de styrène comprise dans un domaine allant de 3 à 40 % en masse, préférentiellement de 3 à 30% en masse.

3. Composition selon l'une quelconque des revendications 1 ou 2, dans laquelle ledit SBR de basse Tg présente une fraction butadiénique ayant une teneur en liaisons vinyl -1,2 comprise entre 4% et 30% (% molaire), de préférence entre 4% et 25%.

4. Composition selon l'une quelconque des revendications précédentes, dans laquelle ledit SBR de basse Tg est fonctionnalisé par une fonction choisie dans le groupe constitué par les groupes fonctionnels comportant une liaison carbone-étain, les groupes fonctionnels aminés, les groupes fonctionnels comportant un silanol, les groupes fonctionnels comportant un alkoxysilane, les groupes carboxyliques, les groupes polyéthers, les groupes époxydes et les mélanges de ces derniers.

5. Composition selon l'une quelconque des revendications précédentes, dans laquelle la charge renforçante est choisie dans le groupe constitué par les silices, les noirs de carbone et les mélanges de ces derniers.

6. Composition selon l'une quelconque des revendications précédentes, dans laquelle le taux de charge renforçante est compris dans un domaine allant de 130 à 160 pce, de préférence de 135 à 155 pce.

7. Composition selon l'une quelconque des revendications précédentes, dans laquelle la charge renforçante majoritaire est du noir de carbone.

8. Composition selon l'une quelconque des revendications 1 à 6, dans laquelle la charge renforçante majoritaire est de la silice.

9. Composition selon l'une quelconque des revendications précédentes, dans laquelle le taux total de plastifiants est compris dans un domaine allant de 110 à 160 pce, de préférence de 110 à 150 pce, préférentiellement de 115 à 130 pce.

10. Composition selon l'une quelconque des revendications précédentes, dans laquelle la résine hydrocarbonée présente une Tg supérieure à 0°C, de préférence supérieure à 30°C.

11. Composition selon l'une quelconque des revendications précédentes, dans laquelle la résine hydrocarbonée présente une masse moléculaire moyenne en nombre comprise entre 400 et 2000 g/mol, de préférence entre 500 et 1500 g/mol.

12. Composition selon l'une quelconque des revendications précédentes dans laquelle la résine hydrocarbonée présente un indice de polymolécularité (Ip) inférieur à 3, de préférence inférieur à 2.

13. Composition selon l'une quelconque des revendications précédentes, dans laquelle l'huile plastifiante est choisie dans le groupe constitué par les huiles naphténiques, les huiles paraffiniques, les huiles MES (Médium Extracted Solvates), les huiles TDAE (Treated Distillate Aromatic Extracts), les huiles minérales, les huiles végétales, les plastifiants éthers, les plastifiants esters, les plastifiants phosphates, les plastifiants sulfonates et les mélanges de ces composés.

14. Pneumatique comprenant une composition selon l'une quelconque des revendications 1 à 13.

15. Pneumatique selon la revendication précédente, comprenant ladite composition selon l'une quelconque des revendications 1 à 13 dans tout ou partie de la bande de roulement.

## Patentansprüche

1. Kautschukzusammensetzung auf Basis von:
- mindestens 80 phe (Gewichtsteile pro hundert Gewichtsteile Elastomer) eines Styrol-Butadien-Elastomers (SBR), das als SBR mit niedriger Tg bezeichnet wird, dessen Glasübergangstemperatur (Tg) < -60 °C ist,
- mindestens 130 phe verstärkendem Füllstoff,
- mindestens 110 phe eines Weichmachersystems, das ein Kohlenwasserstoffharz in einem Gehalt in einem Bereich von 70 bis 100 phe und ein Weichmacheröl in einem Gehalt in einem Bereich von 10 bis 40 phe umfasst,
- ein Vulkanisationssystem.

2. Zusammensetzung nach Anspruch 1, wobei das SBR mit niedriger Tg einen Styrolgehalt in einem Bereich von 3 bis 40 Massen-%, vorzugsweise 3 bis 30 Massen-%, aufweist.

3. Zusammensetzung nach Anspruch 1 oder 2, wobei das SBR mit niedriger Tg einen Butadien anteil mit einem Gehalt von 1,2-Vinylbindungen zwischen 4 % und 30 % (Mol-%), vorzugsweise zwischen 4 % und 25 %, aufweist.

4. Zusammensetzung nach einem der vorhergehenden Ansprüche, wobei das SBR mit niedriger Tg durch eine Funktion aus der Gruppe bestehend aus funktionellen Gruppen mit einer Kohlenstoff-Zinn-Bindung, aminofunktionellen Gruppen, funktionellen Gruppen mit einem Silanol, funktionellen Gruppen mit einem Alkoxysilan, Carboxylgruppen, Polyethergruppen, Epoxidgruppen und Mischungen davon funktionalisiert ist.

5. Zusammensetzung nach einem der vorhergehenden Ansprüche, wobei der verstärkende Füllstoff aus der Gruppe bestehend aus Kieselsäuren, Rußen und Mischungen davon ausgewählt ist.

6. Zusammensetzung nach einem der vorhergehenden Ansprüche, wobei der Gehalt an verstärkendem Füllstoff in einem Bereich von 130 bis 160 phe, vorzugsweise 135 bis 155 phe, liegt.

7. Zusammensetzung nach einem der vorhergehenden Ansprüche, wobei es sich bei dem hauptsächlichen verstärkenden Füllstoff um Ruß handelt.

8. Zusammensetzung nach einem der Ansprüche 1 bis 6, wobei es sich bei dem hauptsächlichen verstärkenden Füllstoff um Kieselsäure handelt.

9. Zusammensetzung nach einem der vorhergehenden Ansprüche, wobei der Gesamtgehalt an Weichmachern in einem Bereich von 110 bis 160 phe, vorzugsweise von 110 bis 150 phe, vorzugsweise von 115 bis 130 phe, liegt.

10. Zusammensetzung nach einem der vorhergehenden Ansprüche, wobei das Kohlenwasserstoffharz eine Tg von mehr als 0 °C, bevorzugt mehr als 30 °C, aufweist.

11. Zusammensetzung nach einem der vorhergehenden Ansprüche, wobei das Kohlenwasserstoffharz eine zahlenmittlere Molmasse zwischen 400 und 2000 g/mol, bevorzugt zwischen 500 und 1500 g/mol, aufweist.

12. Zusammensetzung nach einem der vorhergehenden Ansprüche, wobei das Kohlenwasserstoffharz einen Polymolekularitätsindex (Ip) von weniger als 3, vorzugsweise weniger als 2, aufweist.

13. Zusammensetzung nach einem der vorhergehenden Ansprüche, wobei das Weichmacheröl aus der Gruppe bestehend aus naphthenischen Ölen, Paraffinölen, MES-Ölen (MES = Medium Extracted Solvates), TDAE-Ölen (TDAE = Treated Distillate Aromatic Extracts), Mineralölen, Pflanzenölen, Ether-Weichmachern, Ester-Weichmachern, Phosphat-Weichmachern, Sulfonat-Weichmachern und Mischungen dieser Verbindungen ausgewählt ist.

14. Reifen, umfassend eine Zusammensetzung nach einem der Ansprüche 1 bis 13.

15. Reifen nach dem vorhergehenden Anspruch, umfassend eine Zusammensetzung nach einem der Ansprüche 1 bis 13 in der gesamten Lauffläche oder einem Teil davon.

## Claims

1. Rubber composition based on:
- at least 80 phr (parts by weight per hundred parts by weight of elastomer) of a styrene/butadiene elastomer (SBR) referred to as low-Tg SBR, the glass transition temperature (Tg) of which is less than -60°C,
- at least 130 phr of reinforcing filler,
- at least 110 phr in total of a plasticizing system comprising a hydrocarbon-based resin at a content within a range extending from 70 to 100 phr and a plasticizing oil at a content within a range extending from 10 to 40 phr,
- a vulcanization system.

2. Composition according to Claim 1, wherein said low-Tg SBR has a styrene content within a range extending from 3 to 40% by weight, preferentially from 3 to 30% by weight.

3. Composition according to either of Claims 1 and 2, wherein said low-Tg SBR has a butadiene fraction having a content of 1,2-vinyl bonds of between 4% and 30% (mol%), preferably between 4% and 25%.

4. Composition according to any one of the preceding claims, wherein said low-Tg SBR is functionalized by a function selected from the group consisting of functional groups comprising a carbon-tin bond, amino functional groups, functional groups comprising a silanol, functional groups comprising an alkoxysilane, carboxyl groups, polyether groups, epoxide groups and mixtures thereof.

5. Composition according to any one of the preceding claims, wherein the reinforcing filler is selected from the group consisting of silicas, carbon blacks and mixtures thereof.

6. Composition according to any one of the preceding claims, wherein the content of reinforcing filler is within a range extending from 130 to 160 phr and preferably from 135 to 155 phr.

7. Composition according to any one of the preceding claims, wherein the predominant reinforcing filler is carbon black.

8. Composition according to any one of Claims 1 to 6, wherein the predominant reinforcing filler is silica.

9. Composition according to any one of the preceding claims, wherein the total content of plasticizers is within a range extending from 110 to 160 phr, preferably from 110 to 150 phr and preferentially from 115 to 130 phr.

10. Composition according to any one of the preceding claims, wherein the hydrocarbon-based resin has a Tg of greater than 0°C, preferably greater than 30°C.

11. Composition according to any one of the preceding claims, wherein the hydrocarbon-based resin has a number-average molecular weight of between 400 and 2000 g/mol, preferably between 500 and 1500 g/mol.

12. Composition according to any one of the preceding claims, wherein the hydrocarbon-based resin has a polydispersity index (PI) of less than 3, preferably less than 2.

13. Composition according to any one of the preceding claims, wherein the plasticizing oil is selected from the group consisting of naphthenic oils, paraffinic oils, MES (medium extracted solvates) oils, TDAE (treated distillate aromatic extracts) oils, mineral oils, vegetable oils, ether plasticizers, ester plasticizers, phosphate plasticizers, sulfonate plasticizers and the mixtures of these compounds.

14. Tyre comprising a composition according to any one of Claims 1 to 13.

15. Tyre according to the preceding claim, comprising said composition according to any one of Claims 1 to 13 in all or part of the tread.
